(19) **Europäisches Patentamt**

**European Patent Office**

**Office européen des brevets**

(11) **EP 1 273 986 B1**

(12) **FASCICULE DE BREVET EUROPEEN**

(45) Date de publication et mention
de la délivrance du brevet:
**03.11.2004 Bulletin 2004/45**

(51) Int Cl.⁷: **G05D 1/00**, G05D 1/08

(21) Numéro de dépôt: **02291441.0**

(22) Date de dépôt: **11.06.2002**

(54) **Procédé et dispositif pour commander au moins une surface aérodynamique de profondeur d'un avion lors d'un décollage**

Verfahren und Einrichtung zur Steuerung mindestens einer Trimmungsklappe eines Flugzeugs während des Starts

Device and method for controlling at least one trim surface of an aircraft during takeoff

(84) Etats contractants désignés:
**AT BE CH CY DE DK ES FI FR GB GR IE IT LI LU MC NL PT SE TR**

(30) Priorité: **25.06.2001 FR 0108328**

(43) Date de publication de la demande:
**08.01.2003 Bulletin 2003/02**

(73) Titulaire: **AIRBUS FRANCE**
**31060 Toulouse (FR)**

(72) Inventeur: **Bousquet, Guy**
**31770 Colomiers (FR)**

(74) Mandataire: **Hauer, Bernard**
**Cabinet Bonnétat**
**29, Rue de Saint-Pétersbourg**
**75008 Paris (FR)**

(56) Documents cités:
**FR-A- 2 711 257**      **US-A- 4 829 220**
**US-A- 5 047 942**

**Description**

La présente invention concerne un dispositif et un procédé pour commander au moins une surface aérodynamique de profondeur d'un avion, lors d'une phase de décollage.

On sait que, pour faire décoller un avion, le pilote accélère cet avion sur la piste de décollage, jusqu'à atteindre une vitesse Vr (à un temps tr) à laquelle il actionne un organe de commande de l'avion, par exemple un minimanche. Cet actionnement entraîne le déplacement des surfaces aérodynamiques de profondeur, du type gouvernes de profondeur, ce qui a pour effet de faire cabrer l'avion, dont le train avant se soulève du sol, l'avion continuant de rouler sur la piste de décollage au moyen de son train principal. L'avion est alors toujours en phase d'accélération, son axe longitudinal étant incliné d'un angle d'assiette longitudinale θ par rapport à la piste de décollage. Lorsque l'avion atteint une vitesse Vlof, à une durée T après l'actionnement de l'organe de commande, les roues du train principal quittent à leur tour la piste et le décollage est réalisé.

Toutefois, avant que le décollage soit réalisé, tant que l'avion roule sur la piste, il existe un risque que l'avion touche ladite piste avec la partie arrière de son fuselage si l'angle d'assiette longitudinale présente une valeur trop élevée.

Généralement, l'évolution de l'angle d'assiette θ entre les temps tr et tr+T satisfait à une loi de commande particulière, suivant laquelle ledit angle d'assiette θ croît en fonction du temps.

Par conséquent, si le pilote actionne l'organe de commande à une vitesse Vr faible, le temps T nécessaire pour atteindre la vitesse Vlof est important de sorte que, l'angle d'assiette θ croissant en fonction du temps, on peut atteindre une valeur d'angle d'assiette θ qui est très élevée au temps tr+T, et qui peut être telle que la partie arrière du fuselage touche le sol.

De plus, pour réduire la distance de décollage, le pilote peut être amené à décoller avec des vitesses Vr et Vlof minimales, ce qui nécessite de cabrer davantage l'avion en augmentant l'angle d'assiette. Ceci accroît bien entendu le risque de toucher le sol avec la partie arrière du fuselage.

Ce risque est d'autant plus élevé que l'avion est long et donc que la distance L entre son train principal et ladite partie arrière du fuselage est importante. En effet, pour une hauteur de train donnée, l'angle critique θq pour lequel la partie arrière de l'avion touche le sol diminue lorsque la distance L augmente. Par exemple, sur un avion du type "Airbus A340", l'angle critique θq est de l'ordre de 13,5° à 14°, la valeur de θ lors du décollage avec une vitesse Vr minimale étant de l'ordre de 12° à 12,5° selon la configuration de l'avion. Il en résulte que la marge de l'angle d'assiette θ au décollage n'est que de l'ordre de 1,5°. Le risque de toucher le sol avec la partie arrière du fuselage et donc de détériorer l'avion, doit par conséquent être pris en considération.

Par le brevet FR-2 711 257, on connaît un système de commande de gouvernes de profondeur d'un avion comportant des moyens permettant d'atténuer le signal de commande desdites gouvernes, en fonction de l'angle d'assiette θ de l'avion. L'atténuation est croissante, jusqu'à un seuil déterminé, lorsque l'angle θ augmente. En atténuant l'augmentation de θ en fonction du temps, un tel système diminue le risque le toucher le sol avec la partie arrière du fuselage.

Toutefois, ce risque n'est pas totalement écarté. En effet, malgré cette atténuation, pour un temps T très important, l'angle d'assiette θ peut atteindre la valeur critique θq précitée. De plus, ce système connu présente l'inconvénient d'atténuer le taux de rotation (ou variation d'assiette en fonction du temps) dans tous les cas, même lorsque la vitesse Vr est suffisamment élevée pour qu'il n'y ait pas de risque de toucher le sol avec la partie arrière du fuselage. Dans ce cas, ce système connu rallonge inutilement le temps nécessaire pour atteindre la valeur de l'angle d'assiette θ permettant de réaliser le décollage, ce qui a évidemment pour effet d'augmenter la distance nécessaire au décollage.

La présente invention concerne un procédé pour commander au moins une surface aérodynamique de profondeur d'un avion, lors d'une phase de décollage, qui permet de remédier aux inconvénients précités.

A cet effet, ledit procédé est remarquable, selon l'invention, en ce que, lors de l'accélération de l'avion roulant au sol en vue du décollage, dès qu'un pilote actionne un organe de commande pour commander ladite surface aérodynamique de profondeur de manière à augmenter l'angle d'assiette longitudinale de l'avion par rapport au sol, à une vitesse Vr de roulage au sol :

a) on détermine une vitesse Vlofmin à laquelle les dernières roues de l'avion quittent le sol dans le cas d'un décollage pour lequel l'angle d'assiette longitudinal est commandé selon une loi de commande nominale et présente à cette vitesse Vlofmin une valeur nominale θnom qui est inférieure, d'une marge prédéfinie, d'une valeur critique θq d'angle d'assiette longitudinale, pour laquelle l'avion touche le sol à l'arrière avec une partie de son fuselage ;

b) on détermine la durée T nécessaire à l'avion pour passer de la vitesse Vr à cette vitesse Vlofmin ;

c) on compare cette durée T à une durée nominale Tnom qui correspond à la durée nécessaire à l'avion pour passer, selon une loi de commande nominale, d'une assiette longitudinale de roulement θr (à ladite vitesse Vr) à ladite assiette longitudinale de valeur nominale θnom ; et

d) on déduit de cette comparaison une loi de commande de l'angle d'assiette longitudinale, que l'on applique à l'avion et qui correspond :

- si la durée T est inférieure ou égale à la durée nominale Tnom, à ladite loi de commande nominale ; et
- si la durée T est supérieure à la durée nominale Tnom, à une loi de commande modifiée qui est telle qu'à une durée T après l'actionnement de l'organe de commande par le pilote, l'angle d'assiette longitudinale de l'avion est sensiblement égal à ladite valeur nominale θnom.

Ainsi, grâce à l'invention, lorsqu'il existe un risque que le fuselage de l'avion touche le sol quand la surface aérodynamique de profondeur est commandée par une loi de commande nominale (théorique), on applique à ladite surface aérodynamique une loi modifiée qui empêche un tel contact.

Par conséquent, il n'existe plus aucun risque de contact, ce qui est bien entendu un avantage important pour la sécurité.

De plus, à la différence de la solution proposée par le brevet FR-2 711 257 précité, la loi de commande nominale n'est modifiée que lorsque cela est effectivement nécessaire pour la sécurité. Dans le cas contraire, l'avion est toujours commandé selon la loi de commande nominale qui présente l'avantage (comme on le verra ci-dessous) de représenter plus fidèlement l'actionnement de l'organe de commande par le pilote.

De préférence, ladite loi de commande modifiée suit sensiblement la loi de commande nominale pendant une durée de 3T/4 à partir de l'actionnement de l'organe de commande par le pilote, puis s'écarte de cette loi de commande nominale de sorte qu'à la durée T l'angle d'assiette longitudinale de l'avion est sensiblement égal à ladite valeur nominale.

Ainsi, pendant une majeure partie du temps compris entre tr et tr+T, la loi de commande modifiée reste proche de la loi de commande nominale (théorique). Cela présente l'avantage pour le pilote de ressentir, le plus longtemps possible, l'effet de son action sur l'organe de commande.

Par ailleurs, avantageusement, on détermine l'état d'au moins un paramètre de l'avion qui est susceptible de prendre l'un d'au moins deux états et, pour chacun des états dudit paramètre, on utilise une loi de commande nominale différente et une loi de commande modifiée différente. Dans ce cas, lorsque l'avion est muni d'au moins deux moteurs, ledit paramètre est, de préférence, relatif au fonctionnement desdits moteurs, l'un des états correspondant à un fonctionnement normal de tous les moteurs et l'autre état correspondant à une défaillance d'un desdits moteurs.

Selon l'invention, à l'étape a) précitée, on détermine la durée T en fonction de paramètres de l'avion, de l'accélération de l'avion au moment de l'actionnement de l'organe de commande par le pilote, et de l'état des moteurs de l'avion. Ceci peut être réalisé :

- en résolvant l'équation suivante :

$$\text{Vlof min} - \text{Vr} = \int_{tr}^{T} \text{Acc.dt}$$

dans laquelle :

. tr est le moment où le pilote actionne l'organe de commande ; et
. Acc représente l'accélération de l'avion ; ou

- à partir de l'expression simplifiée suivante :

$$T = (\text{Vlofmin} - \text{Vr}) / \text{Amoy},$$

Amoy étant l'accélération moyenne de l'avion entre les vitesses Vr et Vlofmin. On détermine de préférence cette accélération moyenne Amoy, en multipliant l'accélération qui est mesurée au moment où le pilote actionne l'organe de commande, par un coefficient prédéfini k qui est inférieur à 1.

Par ailleurs, de façon avantageuse, on détermine la vitesse Vlofmin qui est utilisée pour déterminer la durée T, en fonction de la masse de l'avion, de sa configuration, de l'état de ses moteurs et de son environnement.

La présente invention concerne également un dispositif pour commander au moins une surface aérodynamique de profondeur d'un avion lors d'une phase de décollage.

Selon l'invention, ledit dispositif du type comportant :

- un organe de commande, par exemple un minimanche, qui est susceptible d'être actionné par un pilote et qui est associé à un moyen (capteur de position notamment) délivrant un signal qui est représentatif d'un tel actionnement ;
- des moyens de calcul pour déterminer, au moins à partir dudit signal, une loi de commande ; et
- des moyens moteurs, par exemple un moteur électrique ou un vérin, pour commander ladite surface aérodynamique de profondeur, en fonction d'une loi de commande reçue desdits moyens de calcul,

est remarquable en ce que lesdits moyens moteurs commandent ladite surface aérodynamique de profondeur au moins entre le moment d'un premier actionnement de l'organe de commande par le pilote pour commander ladite surface aérodynamique de profondeur de manière à augmenter l'angle d'assiette longitudinale de l'avion par rapport au sol à une vitesse Vr de roulage au sol et le moment où les dernières roues de l'avion quittent le sol à une vitesse de roulage Vlof, et en ce que lesdits moyens de calcul comportent :

- des moyens pour déterminer la durée T nécessaire à l'avion pour passer de la vitesse Vr à la vitesse Vlofmin ;
- des moyens pour comparer cette durée T à une durée nominale Tnom qui correspond à la durée nécessaire à l'avion pour passer d'une assiette longitudinale de roulement θr (à la vitesse Vr) à une assiette de valeur nominale θnom lors d'un décollage nominal, pour lequel l'angle d'assiette longitudinale est commandé selon une loi de commande nominale (théorique), cette valeur nominale θnom étant inférieure, d'une marge prédéfinie, d'une valeur critique θq d'angle d'assiette longitudinale, pour laquelle l'avion touche le sol à l'arrière avec une partie de son fuselage ; et
- des moyens pour déduire de cette comparaison la loi de commande de l'angle d'assiette longitudinale, qui est transmise aux moyens moteurs, cette loi de commande correspondant :

  . si la durée T est inférieure ou égale à la durée nominale Tnom, à ladite loi de commande nominale ; et
  . si la durée T est supérieure à la durée nominale Tnom, à une loi de commande modifiée qui est telle qu'à une durée T après l'actionnement de l'organe de commande par le pilote, l'angle d'assiette longitudinale de l'avion est sensiblement égal à ladite valeur nominale.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.
Les figures 2A à 2C illustrent différentes positions d'un avion roulant sur le sol lors d'un décollage.
La figure 3 est un graphique illustrant différentes lois de commande de l'angle d'assiette longitudinale et permettant de bien comprendre l'action engendrée grâce à l'invention.

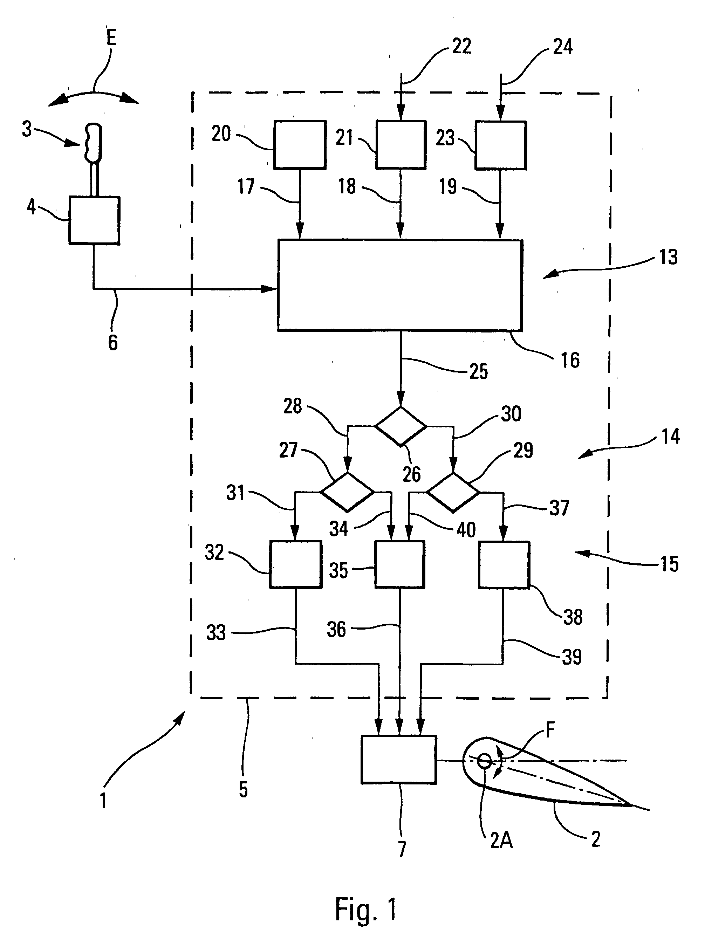

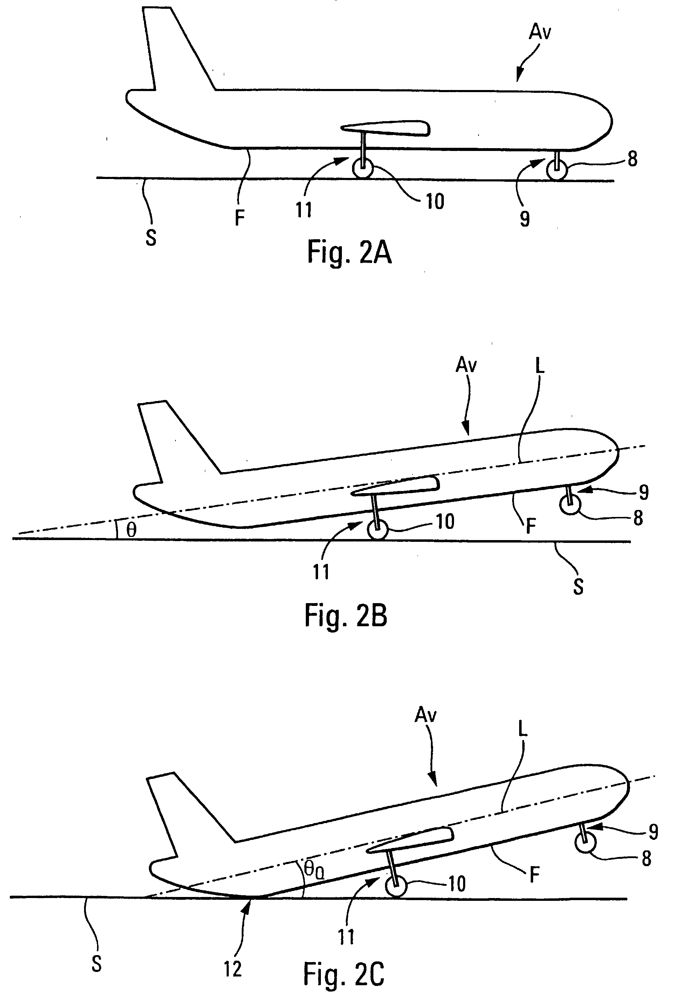

Le dispositif 1 conforme à l'invention et représenté schématiquement sur la figure 1 est destiné à commander une ou plusieurs surfaces aérodynamiques 2 contrôlant en profondeur le pilotage d'un avion Av, en particulier un avion de transport civil, représenté sur les figures 2A à 2C. Ce dispositif 1 comporte de façon connue :

- un organe de commande 3 du type minimanche par exemple, qui est susceptible d'être actionné par un pilote comme indiqué par une double flèche E et qui est associé à un moyen 4 usuel, par exemple un capteur de position, délivrant un signal électrique qui est représentatif d'un tel actionnement ;
- des moyens de calcul 5 qui sont reliés par une liaison 6 au moyen 4 pour déterminer, au moins à partir dudit signal électrique, une loi de commande ; et
- des moyens moteurs 7 (moteur électrique ou vérin par exemple) pour commander ladite surface aérodynamique de profondeur 2 afin de la faire pivoter autour de son axe d'articulation 2A, comme illustré par une double flèche F, en fonction d'une loi de commande reçue desdits moyens de calcul 5.

Ce dispositif 1 est perfectionné selon l'invention pour éviter que l'avion Av ne touche le sol S lors du décollage.
On sait que la phase de décollage comporte, notamment, les étapes suivantes :

- une étape d'accélération illustrée sur la figure 2A, pendant laquelle l'avion Av roule (à une vitesse V) sur la piste de décollage, en étant accéléré, les roues 8 du train avant 9 et les roues 10 du train principal 11 se déplaçant sur le sol S de la piste de décollage ;
- une étape illustrée sur la figure 2B, qui débute à un temps tr, auquel le pilote actionne l'organe de commande 3, pour commander ladite surface aérodynamique de profondeur 2 de manière à augmenter l'angle d'assiette longitudinale θ de l'avion Av qui correspond à l'angle entre l'axe longitudinal L de l'avion Av et le sol S, ce qui a pour effet de faire cabrer l'avion Av, dont le train avant 9 se soulève du sol, l'avion Av continuant de rouler sur la piste de décollage S au moyen de son train principal 11. L'avion Av est alors toujours en phase d'accélération. Cet actionnement a lieu à une vitesse Vr de roulage au sol ; et

- une étape de décollage effectif, lorsque l'avion Av atteint une vitesse particulière Vlof, les roues 10 du train principal 11 quittant à leur tour la piste S.

Toutefois, avant que le décollage soit réalisé, tant que l'avion Av roule sur la piste S, il existe un risque que ledit avion Av touche ladite piste S avec la partie arrière 12 de son fuselage F si l'angle d'assiette longitudinale θ présente une valeur trop élevée, et qu'il est (supérieur ou) égal à une valeur critique θq d'angle d'assiette longitudinale pour laquelle il y a contact. Cette valeur critique θq est illustrée sur la figure 2C.

Le dispositif 1 conforme à l'invention permet d'écarter un tel risque et ainsi d'empêcher que la partie arrière 12 du fuselage F de l'avion Av ne touche le sol S au décollage.

Pour ce faire, selon l'invention, lesdits moyens de calcul 5 du dispositif 1 comportent :

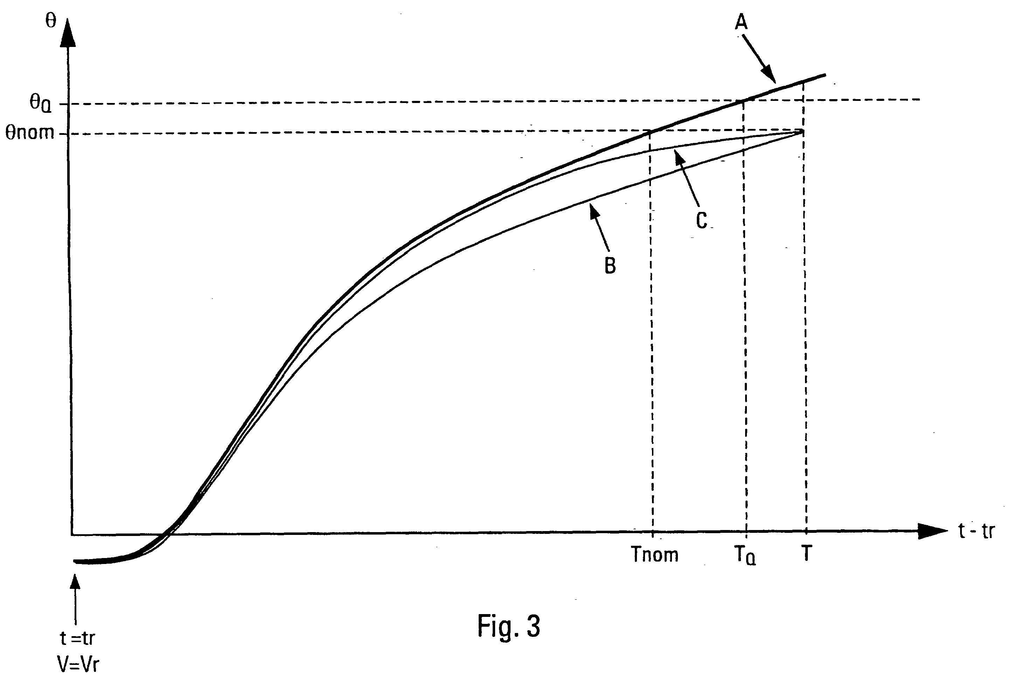

- des moyens 13 pour déterminer la durée T nécessaire à l'avion Av pour passer de la vitesse Vr à la vitesse Vlofmin ;
- des moyens 14 pour comparer cette durée T à une durée nominale Tnom qui correspond à la durée nécessaire à l'avion Av pour passer de l'assiette longitudinale de roulement θr (non représentée explicitement, mais proche de zéro et même légèrement inférieure à zéro dans l'exemple illustré sur la figure 3) à la vitesse Vr à une assiette de valeur nominale θnom lors d'un décollage nominal, pour lequel l'angle d'assiette longitudinale θ est commandé selon une loi de commande nominale (théorique), cette valeur nominale θnom étant inférieure, d'une marge prédéfinie (de préférence 2°), de la valeur critique θq d'angle d'assiette longitudinale, pour laquelle l'avion Av touche le sol S à l'arrière avec une partie 12 de son fuselage F ; et
- des moyens 15 pour déduire de cette comparaison la loi de commande de l'angle d'assiette longitudinale θ, qui est transmise aux moyens moteurs 7, cette loi de commande correspondant :

  .   si la durée T est inférieure ou égale à la durée nominale Tnom, à ladite loi de commande nominale théorique ; et
  .   si la durée T est supérieure à la durée nominale Tnom, à une loi de commande modifiée qui est telle qu'à une durée T après l'actionnement (qui a lieu à t=tr) de l'organe de commande 3 par le pilote, donc à un instant t=tr+T, l'angle d'assiette longitudinale θ de l'avion Av est sensiblement égal à ladite valeur nominale θnom.

L'action réalisée par le dispositif 1 conforme à l'invention peut être bien comprise en se référant au graphique de la figure 3.

Sur cette figure 3, la courbe A illustre la loi de commande nominale de l'angle d'assiette θ. Selon cette loi de commande nominale, l'angle d'assiette θ varie en fonction du temps t, à partir du moment tr (actionnement de l'organe de commande 3 par le pilote) où l'angle θ est légèrement inférieur à zéro, puisque l'avion Av est alors légèrement incliné vers le bas par l'avant. De plus, au temps t=tr+Tnom, l'angle d'assiette θ prend la valeur nominale θnom qui est, par définition, inférieure à la valeur critique θq à laquelle la partie arrière 12 du fuselage F de l'avion Av touche le sol. Bien entendu, ladite valeur critique θq dépend de la hauteur du train principal 11 et de la longueur entre ladite partie 12 et ledit train principal 11 et peut être facilement déterminée pour chaque avion Av.

Selon l'invention, si la durée T (durée entre l'actionnement de l'organe de commande 3 et le moment où l'avion Av quitte le sol S) est inférieure (ou égale) à la durée Tnom, l'angle d'assiette maximale obtenue au temps t=tr+T, lorsque l'avion quitte le sol, est inférieur (ou égal) à l'angle nominal θnom. Dans ce cas, il n'existe donc aucun risque de contact avec le sol S. Par conséquent, on peut utiliser, dans ce cas, en toute sécurité, la loi de commande nominale A.

En revanche, si la durée T est supérieure à la durée Tnom, comme cela est représenté à titre d'exemple sur la figure 3, il est nécessaire d'utiliser une loi de commande modifiée, comme la loi B par exemple. En effet, dans l'exemple de la figure 3, selon la loi A, à un temps t=tr+Tq (c'est-à-dire avant le temps t=tr+T où l'avion Av quitte le sol), l'angle d'assiette θ prend la valeur θq illustrant le contact avec le sol.

En revanche, si on utilise la loi de commande modifiée B, au temps t=tr+T, l'angle d'assiette prend la valeur nominale θnom. Le décollage se fait donc sans risque de contact avec le sol S, en utilisant cette loi de commande modifiée B.

De préférence, on utilise toutefois la loi de commande modifiée C qui, comme on peut le voir sur la figure 3, suit sensiblement la loi de commande nominale A pendant une durée importante, par exemple de l'ordre de 3T/4, à partir de l'actionnement de l'organe de commande 3 par le pilote, puis s'écarte de cette loi de commande nominale A de sorte qu'à la durée T (temps t=tr+T), l'angle d'assiette longitudinale θ de l'avion Av est sensiblement égal à ladite valeur nominale θnom.

Ainsi, pendant une majeure partie du temps compris entre t=tr et t=tr+T, la loi de commande modifiée C reste proche de la loi de commande nominale A (théorique). Cela présente l'avantage pour le pilote de lui permettre de ressentir, le plus longtemps possible, l'effet de son action sur l'organe de commande 3.

A titre d'exemple, la courbe A peut correspondre à une loi nominale telle que celle utilisée, par exemple, dans le brevet FR-2 711 257 avant atténuation. La courbe B est atténuée par rapport à la courbe A, en appliquant par exemple à cette dernière un coefficient CO<1. La courbe C, quant à elle, peut par exemple être définie comme suit :

$$\begin{cases} C(t) = C1 \cdot A(t) \text{ pour } t \leq T1 \text{ où } C1 \langle 1 \text{ et } C1 \approx 1 \text{ ; et} \\ C(t) = \theta1 + C2 \cdot \left[A(t) - A(T1)\right] \text{ pour } t \rangle T1 \text{ où } C2 \langle C1 \langle 1 \text{ et } \theta1 = C(T1) \end{cases}$$

Dans un mode de réalisation particulier, on détermine l'état d'au moins un paramètre de l'avion Av qui est susceptible de prendre l'un d'au moins deux états et, pour chacun desdits états dudit paramètre, on utilise une loi de commande nominale différente et une loi de commande modifiée différente. Dans ce cas, lorsque l'avion Av est muni d'au moins deux moteurs non représentés, ledit paramètre est, de préférence, relatif au fonctionnement desdits moteurs, l'un des états correspondant à un fonctionnement normal de tous les moteurs et l'autre état correspondant à une défaillance d'un desdits moteurs.

Par ailleurs, selon l'invention, la vitesse Vlofmin prise en compte pour le calcul de T est déterminée selon un mode de calcul usuel connu des spécialistes de l'aéronautique, en tenant compte de la masse de l'avion Av, de sa configuration (position des volets, etc ...), de l'état des moteurs (AEO : "All Engine Operative" : tous les moteurs fonctionnent / OEI : "One Engine Inoperative" : un moteur est en panne) et de son environnement (conditions atmosphériques, piste, etc ...).

Par ailleurs, la durée T peut être calculée selon la méthode suivante :

- pour t > tr, on a :

$$V(t) = Vr + \int_{tr}^{t} Acc.dt \qquad\qquad (1)$$

où V illustre la vitesse et Acc est l'accélération instantanée de l'avion Av,

- lors du décollage (t=T), on a aussi :

$$V(T) = Vlofmin \qquad\qquad (2)$$

- on déduit des deux équations (1) et (2) précédentes :

$$V(T) = Vlof\,min = Vr + \int_{tr}^{T} Acc.dt \qquad\qquad (3)$$

- cette dernière équation (3) peut encore s'écrire :

$$Vlof\,min - Vr = \int_{tr}^{T} Acc.dt \qquad\qquad (4)$$

La résolution de cette équation (4) permet de calculer la durée T. Pour ce faire, il est bien entendu nécessaire de connaître l'évolution de l'accélération Acc de tr à T. Cette évolution de l'accélération dépend de nombreux paramètres, connus des spécialistes de l'aéronautique et disponibles à bord de l'avion Av, tels que la poussée des moteurs et la position des gouvernes 2 (ces paramètres résultant de l'application de la loi de commande), la vitesse Vr, l'accélération Acc(tr), les conditions atmosphériques, la masse de l'avion Av, etc ...

Dans le cas où l'on souhaite simplifier le calcul de la durée T, il est possible de calculer une valeur approchée de cette dernière en utilisant l'expression suivante :

$$T = (Vlofmin - Vr) / Amoy \qquad\qquad (5)$$

où Amoy est l'accélération moyenne sur l'intervalle de temps [tr ; tr+T], c'est-à-dire lorsque la vitesse passe de Vr à Vlofmin. En pratique, cette accélération moyenne Amoy peut être estimée en appliquant un coefficient k<1 à l'accélération Acc(tr) mesurée à l'instant tr pour une vitesse Vr. Par exemple, pour un quadriréacteur civil moderne du type "Airbus A340", les calculs montrent qu'une valeur moyenne de k≈0,8 répond en pratique aux conditions opérationnelles. Toutefois, le coefficient k peut, si nécessaire, être une variable de quelques paramètres très influents. Ce coefficient k permet de tenir compte de la diminution de l'accélération après l'instant tr en raison de l'augmentation de la traînée aérodynamique de l'avion Av, due à l'augmentation de l'assiette longitudinale θ de ce dernier, et de l'évolution de la poussée des moteurs avec la vitesse.

On notera que si les paramètres de l'avion changent pendant la phase de décollage entre tr et tr+T (par exemple en raison de la panne d'un moteur), l'accélération moyenne Amoy est recalculée afin de déterminer une nouvelle valeur de T et de modifier si nécessaire la loi de commande.

Pour un type d'avion donné, l'application d'une loi de commande θ(t) permet de calculer le temps Tnom correspondant à l'angle d'assiette θnom. Etant donné que l'on applique généralement deux lois de pilotage distinctes selon l'état des moteurs ("AEO"/"OEI"), on calcule donc, a priori, les deux valeurs de Tnom correspondant à ces états "AEO" et "OEI" des moteurs (bien entendu, si l'on est amené à utiliser d'autres lois de commande en fonction des valeurs de paramètres particuliers de l'avion, il convient de calculer autant de valeurs de Tnom qu'il y a de lois de commande possibles). Par exemple, dans le cas d'un quadriréacteur civil, le temps Tnom peut être égal à environ 5 secondes pour la configuration AEO et à environ 6 secondes pour la configuration OEI.

Dans le mode de réalisation préféré représenté sur la figure 1, les moyens de calcul 5 comportent des moyens 16 qui déterminent la durée T, lorsque le pilote actionne l'organe de commande 3 (liaison 6). Ces moyens 16 calculent la durée T en utilisant la relation (5) précitée :

$$T = (Vlofmin-Vr) / Amoy.$$

Pour ce faire, ils sont reliés, respectivement par des liaisons 17 à 19, à :

- des moyens 20 usuels pour déterminer, en particulier pour mesurer, la vitesse Vr ;
- des moyens 21 pour déterminer de façon usuelle la vitesse Vlofmin, à partir d'informations (masse et configuration de l'avion Av, état des moteurs, ...) reçues par une liaison 22 ; et
- des moyens 23 pour déterminer, de façon usuelle, l'accélération moyenne Amoy, à partir d'informations (état des moteurs, accélération à la vitesse Vr, ...) reçues par une liaison 24.

La durée T déterminée par les moyens 16 est transmise par une liaison 25 à un moyen 26 qui, en fonction de l'état des moteurs, la transmet :

- soit à un moyen de comparaison 27 par une liaison 28, si tous les moteurs fonctionnent (configuration "AEO") ;
- soit à un moyen de comparaison 29 par une liaison 30, si l'un des moteurs est défaillant (configuration "OEI").

Le moyen 27 compare la durée T à la durée nominale Tnom correspondant à la configuration AEO (par exemple 5 secondes), et :

- si T est supérieur à Tnom, un ordre est transmis (liaison 31) à un moyen 32 pour qu'il fournisse (liaison 33) une loi de commande modifiée, par exemple la loi B ou la loi C, aux moyens moteurs 7 ; et
- si T est inférieur ou égal à Tnom, un ordre est transmis (liaison 34) à un moyen 35 pour qu'il fournisse (liaison 36) la loi de commande nominale (loi A) auxdits moyens moteurs 7.

De même, le moyen 29 compare la durée T à la durée nominale Tnom pour la configuration OEI, qui est généralement différente (par exemple 6 secondes), et :

- si T est supérieur à Tnom, un ordre est transmis (liaison 37) à un moyen 38 pour qu'il fournisse (liaison 39) une loi de commande modifiée aux moyens moteurs 7 ; et
- sinon, un ordre est transmis (liaison 40) au moyen 35 pour demander la transmission de la loi de commande nominale.

Les moyens 16, 20, 21 et 23 correspondent aux moyens 13 précités, les moyens 26, 27 et 29 correspondent aux moyens 14 précités et les moyens 32, 35 et 38 correspondent aux moyens 15 précités.

**Revendications**

1. Procédé pour commander au moins une surface aérodynamique de profondeur d'un avion, lors d'une phase de décollage,

   **caractérisé en ce que**, lors de l'accélération de l'avion (Av) roulant au sol (S) en vue du décollage, dès qu'un pilote actionne un organe de commande (3) pour commander ladite surface aérodynamique de profondeur (2) de manière à augmenter l'angle d'assiette longitudinale (θ) de l'avion (Av) par rapport au sol (S), à une vitesse Vr de roulage au sol :

   a) on détermine une vitesse Vlofmin à laquelle les dernières roues (10) de l'avion (Av) quittent le sol (S) dans le cas d'un décollage pour lequel l'angle d'assiette longitudinal (θ) est commandé selon une loi de commande nominale et présente à cette vitesse Vlofmin une valeur nominale (θnom) qui est inférieure, d'une marge prédéfinie, d'une valeur critique (θq) d'angle d'assiette longitudinale, pour laquelle l'avion (Av) touche le sol (S) à l'arrière avec une partie (12) de son fuselage (F) ;

   b) on détermine la durée T nécessaire à l'avion (Av) pour passer de la vitesse Vr à cette vitesse Vlofmin ;

   c) on compare cette durée T à une durée nominale Tnom qui correspond à la durée nécessaire à l'avion (Av) pour passer, selon une loi de commande nominale, d'une assiette longitudinale de roulement à la vitesse Vr à ladite assiette longitudinale de valeur nominale (θnom) ; et

   d) on déduit de cette comparaison une loi de commande (A, B, C) de l'angle d'assiette longitudinale (θ), que l'on applique à l'avion (Av) et qui correspond :

   - si la durée T est inférieure ou égale à la durée nominale Tnom, à ladite loi de commande nominale (A) ; et
   - si la durée T est supérieure à la durée nominale Tnom, à une loi de commande modifiée (B, C) qui est telle qu'à une durée T après l'actionnement de l'organe de commande (3) par le pilote, l'angle d'assiette longitudinale (θ) de l'avion (Av) est sensiblement égal à ladite valeur nominale (θnom).

2. Procédé selon la revendication 1,

   **caractérisé en ce que** ladite loi de commande modifiée (C) suit sensiblement la loi de commande nominale (A) pendant une durée de 3T/4 à partir de l'actionnement de l'organe de commande (3) par le pilote, puis s'écarte de cette loi de commande nominale (A) de sorte qu'à la durée T l'angle d'assiette longitudinale (θ) de l'avion (Av) est sensiblement égal à ladite valeur nominale (θnom).

3. Procédé selon l'une des revendications 1 et 2,

   **caractérisé en ce que** l'on détermine l'état d'au moins un paramètre de l'avion (Av) qui est susceptible de prendre l'un d'au moins deux états et **en ce que**, pour chacun des états dudit paramètre, on utilise une loi de commande nominale différente et une loi de commande modifiée différente.

4. Procédé selon la revendication 3,

   **caractérisé en ce que**, pour un avion (Av) qui est muni d'au moins deux moteurs, ledit paramètre est relatif au fonctionnement des moteurs, l'un des états correspondant à un fonctionnement normal de tous les moteurs et l'autre état correspondant à une défaillance d'un desdits moteurs.

5. Procédé selon l'une quelconque des revendications précédentes,

   **caractérisé en ce qu'**à l'étape a), on détermine la durée T en fonction de paramètres de l'avion (Av), de l'accélération de l'avion (Av) au moment de l'actionnement de l'organe de commande (3) par le pilote, et de l'état des moteurs de l'avion (Av).

6. Procédé selon l'une quelconque des revendications 1 à 5,

   **caractérisé en ce qu'**à l'étape a), on détermine la durée T en résolvant l'équation suivante :

$$\text{Vlofmin} - \text{Vr} = \int_{tr}^{T} \text{Acc.dt}$$

   dans laquelle :

   - tr est le moment où le pilote actionne l'organe de commande (3) ; et

- Acc représente l'accélération de l'avion (Av).

7. Procédé selon l'une quelconque des revendications 1 à 5,
   **caractérisé en ce qu'**à l'étape a), on détermine la durée T à partir de l'expression suivante :

$$T = (Vlofmin- Vr) / Amoy,$$

Amoy étant l'accélération moyenne de l'avion (Av) entre les vitesses Vr et Vlofmin.

8. Procédé selon la revendication 7,
   **caractérisé en ce qu'**on détermine ladite accélération moyenne Amoy, en multipliant l'accélération mesurée au moment où le pilote actionne l'organe de commande (3), par un coefficient prédéfini k qui est inférieur à 1.

9. Procédé selon l'une quelconque des revendications précédentes,
   **caractérisé en ce que** l'on détermine la vitesse Vlofmin qui est utilisée pour déterminer la durée T, en fonction de la masse de l'avion (Av), de sa configuration, de l'état de ses moteurs et de son environnement.

10. Dispositif pour commander au moins une surface aérodynamique de profondeur (2) d'un avion (Av) lors d'une phase de décollage, ledit dispositif (1) comportant :

    - un organe de commande (3) qui est susceptible d'être actionné par un pilote et qui est associé à un moyen (4) délivrant un signal qui est représentatif d'un tel actionnement ;
    - des moyens de calcul (5) pour déterminer, au moins à partir dudit signal, une loi de commande (A, B, C) ; et
    - des moyens moteurs (7) pour commander ladite surface aérodynamique de profondeur (2), en fonction d'une loi de commande (A, B, C) reçue desdits moyens de calcul (5),

    **caractérisé en ce que** lesdits moyens moteurs (7) commandent ladite surface aérodynamique de profondeur (2) au moins entre le moment d'un premier actionnement de l'organe de commande (3) par le pilote pour commander ladite surface aérodynamique de profondeur (2) de manière à augmenter l'angle d'assiette longitudinale de l'avion (Av) par rapport au sol (S) à une vitesse Vr de roulage au sol et le moment où les dernières roues (10) de l'avion (Av) quittent le sol (S) à une vitesse de roulage Vlof, et **en ce que** lesdits moyens de calcul (5) comportent

    - des moyens (13) pour déterminer la durée T nécessaire à l'avion (Av) pour passer de la vitesse Vr à la vitesse Vlofmin ;
    - des moyens (14) pour comparer cette durée T à une durée nominale Tnom qui correspond à la durée nécessaire à l'avion (Av) pour passer d'une assiette longitudinale de roulement à une assiette de valeur nominale (θnom) lors d'un décollage nominal, pour lequel l'angle d'assiette longitudinale (θ) est commandé selon une loi de commande nominale (A), cette valeur nominale (θnom) étant inférieure, d'une marge prédéfinie, d'une valeur critique (θq) d'angle d'assiette longitudinale, pour laquelle l'avion (Av) touche le sol (S) à l'arrière avec une partie (12) de son fuselage (F) ; et
    - des moyens (15) pour déduire de cette comparaison la loi de commande (A, B, C) de l'angle d'assiette longitudinale (θ), qui est transmise aux moyens moteurs (7), cette loi de commande correspondant :

      . si la durée T est inférieure ou égale à la durée nominale Tnom, à ladite loi de commande nominale (A) ; et
      . si la durée T est supérieure à la durée nominale Tnom, à une loi de commande modifiée (B, C) qui est telle qu'à une durée T après l'actionnement de l'organe de commande (3) par le pilote, l'angle d'assiette longitudinale (θ) de l'avion (Av) est sensiblement égal à ladite valeur nominale (θnom).

## Patentansprüche

1. Verfahren zur Steuerung mindestens einer Trimmklappe eines Flugzeugs während der Startphase,
   **dadurch gekennzeichnet, dass** man bei der Beschleunigung des Flugzeugs (Av), das zum Zwecke des Startens auf dem Boden (S) rollt, sobald ein Pilot ein Steuerorgan (3) betätigt, um die Trimmklappe (2) so zu steuern, dass sich der Trimmwinkel (θ) zwischen der Längsachse des Flugzeugs (Av) und dem Boden (S) vergrößert, wenn es mit einer Geschwindigkeit Vr auf dem Boden rollt:

a) eine Geschwindigkeit Vlofmin bestimmt, bei der die letzten Räder (10) des Flugzeugs (Av) den Boden (S) verlassen, wenn es sich um einen Start handelt, bei dem der Trimmwinkel ($\theta$) gemäß einer nominalen Vorgabefunktion gesteuert wird und bei dieser Geschwindigkeit Vlofmin einen Nennwert ($\theta$nom) aufweist, der um eine vorher definierte Toleranzspanne kleiner ist als ein kritischer Wert ($\theta$q) des Trimmwinkels, bei dem das Flugzeug (Av) mit einem hinteren Teil (12) seines Rumpfes (F) den Boden berührt;

b) die Zeitdauer T bestimmt, die das Flugzeug (Av) benötigt, um von der Geschwindigkeit Vr auf diese Geschwindigkeit Vlofmin zu kommen;

c) diese Zeitdauer T mit einer Nennzeitdauer Tnom vergleicht, die der Zeitdauer entspricht, die das Flugzeug (Av) benötigt, um gemäß einer nominalen Vorgabefunktion von einem Trimmwinkel beim Rollvorgang mit der Geschwindigkeit Vr zu einem Trimmwinkel mit dem Nennwert ($\theta$nom) überzugehen; und

d) aus diesem Vergleich eine Vorgabefunktion (A, B, C) für den Trimmwinkel ($\theta$) ableitet, die man auf das Flugzeug (Av) anwendet und die:

- wenn die Zeitdauer T kleiner oder gleich der Nennzeitdauer Tnom ist, der nominalen Vorgabefunktion (A) entspricht; und
- wenn die Zeitdauer T größer ist als die Nennzeitdauer Tnom, einer geänderten Vorgabefunktion (B, C) entspricht, die so ausgelegt ist, dass bei einer Zeitdauer T nach der Betätigung des Steuerorgans (3) durch den Piloten der Trimmwinkel ($\theta$) des Flugzeugs (Av) ungefähr genauso groß ist wie der Nennwert ($\theta$nom).

2. Verfahren nach Anspruch 1,
**dadurch gekennzeichnet, dass** die geänderte Vorgabefunktion (C) für eine Dauer von 3T/4 nach der Betätigung des Steuerorgans (3) durch den Piloten deutlich der nominalen Vorgabefunktion (A) folgt und dann von dieser nominalen Vorgabefunktion

A) abweicht, so dass bei der Zeitdauer T der Trimmwinkel ($\theta$) des Flugzeugs (Av) ungefähr genauso groß ist wie der Nennwert ($\theta$nom).

3. Verfahren nach einem der Ansprüche 1 und 2,
**dadurch gekennzeichnet, dass** man den Zustand von mindestens einem Parameter des Flugzeugs (Av) bestimmt, der einen von mindestens zwei Zuständen annehmen kann, und man für jeden der Zustände des Parameters eine andere nominale Vorgabefunktion und ein andere geänderte Vorgabefunktion verwendet.

4. Verfahren nach Anspruch 3,
**dadurch gekennzeichnet, dass** bei einem Flugzeug (Av), das mit mindestens zwei Triebwerken ausgestattet ist, der Parameter relativ zur Funktion der Triebwerke ist, wobei einer der Zustände der normalen Funktion aller Triebwerke entspricht und der andere Zustand einem Ausfall eines der Triebwerke entspricht.

5. Verfahren nach einem der vorstehend genannten Ansprüche,
**dadurch gekennzeichnet, dass** man in Stufe a) die Zeitdauer T in Abhängigkeit von Parametern des Flugzeugs (Av), der Beschleunigung des Flugzeugs (Av) im Moment der Betätigung des Steuerorgans (3) durch den Piloten und dem Zustand der Triebwerke des Flugzeugs (Av) bestimmt.

6. Verfahren nach einem der Ansprüche 1 bis 5,
**dadurch gekennzeichnet, dass** man in Stufe a) die Zeitdauer T bestimmt, indem man die folgende Gleichung löst:

$$\text{Vlofmin-Vr} = \int_{tr}^{T} Acc.dt$$

wobei gilt:

- tr ist der Moment, in dem Pilot das Steuerorgan (3) betätigt; und
- Acc stellt die Beschleunigung des Flugzeugs (Av) dar.

7. Verfahren nach einem der Ansprüche 1 bis 5,
**dadurch gekennzeichnet, dass** man in Stufe a) die Zeitdauer T anhand des folgenden Ausdrucks bestimmt:

$$T = (Vlofmin-Vr) / Amoy,$$

wobei Amoy die durchschnittliche Beschleunigung des Flugzeugs (Av) zwischen den Geschwindigkeiten Vr und Vlofmin ist.

**8.** Verfahren nach Anspruch 7,
**dadurch gekennzeichnet, dass** man die durchschnittliche Beschleunigung Amoy bestimmt, indem man die Beschleunigung, die in dem Moment gemessen wird, in dem der Pilot das Steuerorgan (3) betätigt, mit einem zuvor definierten Koeffizienten k multipliziert, der kleiner ist als 1.

**9.** Verfahren nach einem der vorstehend genannten Ansprüche,
**dadurch gekennzeichnet, dass** man die Geschwindigkeit Vlofmin, die zur Bestimmung der Zeitdauer T verwendet wird, in Abhängigkeit von der Masse des Flugzeugs (Av), seiner Konfiguration, dem Zustand seiner Triebwerke und seiner Umgebung bestimmt.

**10.** Vorrichtung zur Steuerung mindestens einer Trimmklappe (2) eines Flugzeugs (Av) während der Startphase, wobei die Vorrichtung (1) Folgendes aufweist:

- ein Steuerorgan (3), das von einem Piloten betätigt werden kann und an eine Vorrichtung (4) angeschlossen ist, die ein Signal liefert, das solch eine Betätigung wiedergibt;
- Bordcomputer (5), um zumindest ausgehend von dem Signal eine Vorgabefunktion (A, B, C) zu bestimmen; und
- Antriebsvorrichtungen (7), um die Trimmklappe (2) in Abhängigkeit von einer Vorgabefunktion (A, B, C) zu steuern, die von den Bordcomputern (5) empfangen wird,

**dadurch gekennzeichnet, dass** die Antriebsvorrichtungen (7) die Trimmklappe (2) zumindest zwischen dem Moment der ersten Betätigung des Steuerorgans (3) durch den Piloten steuern, mit der dieser die Trimmklappe (2) so steuert, dass sich der Trimmwinkel zwischen der Längsachse des Flugzeugs (Av) und dem Boden (S) bei einer Geschwindigkeit Vr beim Rollen auf dem Boden vergrößert, und dem Moment, in dem die letzten Räder (10) des Flugzeugs (Av) bei einer Rollgeschwindigkeit Vlof den Boden (S) verlassen, und dass die Bordcomputer (5) die folgenden Vorrichtungen aufweisen:

- Vorrichtungen (13), um die Zeitdauer T zu bestimmen, die nötig ist, damit das Flugzeug (Av) von der Geschwindigkeit Vr zur Geschwindigkeit Vlofmin übergeht;
- Vorrichtungen (14), um diese Zeitdauer T mit einer Nennzeitdauer Tnom zu vergleichen, die der Zeitdauer entspricht, die nötig ist, damit das Flugzeug (Av) von einem Roll-Trimmwinkel zu einem Winkel mit dem Nennwert (enom) bei einem Nennstart übergeht, bei dem der Trimmwinkel (θ) gemäß einer nominalen Vorgabefunktion (A) gesteuert wird, wobei dieser Nennwert (θnom) um eine vorher definierte Toleranzspanne kleiner ist als ein kritischer Wert (θq) des Trimmwinkels, bei dem das Flugzeug (Av) mit einem hinteren Teil (12) seines Rumpfes (F) den Boden (S) berührt; und
- Vorrichtungen (15), um von diesem Vergleich die Vorgabefunktion (A, B, C) des Trimmwinkels (θ) abzuleiten, die an die Antriebsvorrichtungen (7) übertragen wird, wobei diese Vorgabefunktion:

  • wenn die Zeitdauer T kleiner oder gleich der Nennzeitdauer Tnom ist, der nominalen Vorgabefunktion (A) entspricht; und
  • wenn die Zeitdauer T größer ist als die Nennzeitdauer Tnom, einer geänderten Vorgabefunktion (B, C) entspricht, die so ausgelegt ist, dass bei einer Zeitdauer T nach der Betätigung des Steuerorgans (3) durch den Piloten der Trimmwinkel (9) des Flugzeugs (Av) ungefähr genauso groß ist wie der Nennwert (θnom).

## Claims

**1.** A process for controlling at least one aerodynamic elevator surface of an aircraft, during a takeoff phase,
**characterized in that**, during the acceleration of the aircraft (Av) running along the ground (S) with a view to takeoff, as soon as a pilot actuates a control member (3) for controlling said aerodynamic elevator surface (2) in such a way as to increase the pitch attitude angle (0) of the aircraft (Av) with respect to the ground (S), at a ground running speed Vr:

a) a speed Vlofmin is determined at which the last wheels (10) of the aircraft (Av) leave the ground (S) in the case of a takeoff for which the pitch attitude angle (θ) is controlled according to a nominal control law and exhibits at this speed Vlofmin a nominal value (θnom) which is below, by a predefined margin, a critical value (θq) of pitch attitude angle, for which the aircraft (Av) touches the ground (S) at the rear with a part (12) of its fuselage (F);

b) the duration T required for the aircraft (Av) to go from the speed Vr to this speed Vlofmin is determined;

c) this duration T is compared with a nominal duration Tnom which corresponds to the duration required for the aircraft (Av) to go, according to a nominal control law, from a pitch attitude of running at the speed Vr to said pitch attitude of nominal value (θnom); and

d) from this comparison is deduced a control law (A, B, C) for the pitch attitude angle (θ), which is applied to the aircraft (Av) and which corresponds:

- if the duration T is less than or equal to the nominal duration Tnom, to said nominal control law (A); and
- if the duration T is greater than the nominal duration Tnom, to a modified control law (B, C) which is such that at a duration T after the actuation of the control member (3) by the pilot, the pitch attitude angle (θ) of the aircraft (Av) is substantially equal to said nominal value (θnom).

2. The process as claimed in claim 1,
**characterized in that** said modified control law (C) substantially follows the nominal control law (A) for a duration of 3T/4 starting from the actuation of the control member (3) by the pilot, then deviates from this nominal control law (A) so that at the duration T the pitch attitude angle (θ) of the aircraft (Av) is substantially equal to said nominal value (θnom).

3. The process as claimed in one of claims 1 and 2,
**characterized in that** the state of at least one parameter of the aircraft (Av) which is capable of taking one of at least two states is determined and **in that**, for each of the states of said parameter, a different nominal control law and a different modified control law are used.

4. The process as claimed in claim 3,
**characterized in that**, for an aircraft (Av) which is fitted with at least two engines, said parameter relates to the operation of the engines, one of the states corresponding to normal operation of all the engines and the other state corresponding to a failure of one of said engines.

5. The process as claimed in any one of the preceding claims,
**characterized in that** in step a), the duration T is determined as a function of parameters of the aircraft (Av), of the acceleration of the aircraft (Av) at the moment of the actuation of the control member (3) by the pilot, and of the state of the engines of the aircraft (Av).

6. The process as claimed in any one of claims 1 to 5,
**characterized in that** in step a), the duration T is determined by solving the following equation:

$$\text{Vlofmin} - \text{Vr} = \int_{tr}^{T} Acc.dt$$

in which:

- tr is the moment at which the pilot actuates the control member (3); and
- Acc represents the acceleration of the aircraft (Av).

7. The process as claimed in any one of claims 1 to 5,
**characterized in that** in step a), the duration T is determined from the following expression:

$$T = (\text{Vlofmin} - \text{Vr})/Amoy,$$

Amoy being the average acceleration of the aircraft (Av) between the speeds Vr and Vlofmin.

8. The process as claimed in claim 7,
   **characterized in that** said average acceleration Amoy is determined by multiplying the acceleration measured at the moment at which the pilot actuates the control member (3), by a predefined coefficient k which is less than 1.

9. The process as claimed in any one of the preceding claims,
   **characterized in that** the speed Vlofmin which is used to determine the duration T is determined as a function of the mass of the aircraft (Av), of its configuration, of the state of its engines and of its environment.

10. A device for controlling at least one aerodynamic elevator surface (2) of an aircraft (Av) during a take off phase, said device (1) comprising:

    - a control member (3) which is capable of being actuated by a pilot and which is associated with a means (4) delivering a signal which is representative of such an actuation;
    - calculation means (5) for determining, at least from said signal, a control law (A, B, C); and
    - motor means (7) for controlling said aerodynamic elevator surface (2) as a function of a control law (A, B, C) received from said calculation means (5),

    **characterized in that** said motor means (7) control said aerodynamic elevator surface (2) at least between the moment of a first actuation of the control member (3) by the pilot so as to control said aerodynamic elevator surface (2) in such a way as to increase the pitch attitude angle of the aircraft (Av) with respect to the ground (S) at a ground running speed Vr and the moment at which the last wheels (10) of the aircraft (Av) leave the ground (S) at a running speed Vlof, and **in that** said calculation means (5) comprise:

    - means (13) for determining the duration T required for the aircraft (Av) to go from the speed Vr to the speed Vlofmin;
    - means (14) for comparing this duration T with a nominal duration Tnom which corresponds to the duration required for the aircraft (Av) to go from a running pitch attitude to an attitude of nominal value ($\theta$nom) during a nominal takeoff, for which the pitch attitude angle ($\theta$) is controlled according to a nominal control law (A), this nominal value ($\theta$nom) being below, by a predefined margin, a critical value ($\theta$q) of pitch attitude angle, for which the aircraft (Av) touches the ground (S) at the rear with a part (12) of its fuselage (F); and
    - means (15) for deducing from this comparison the control law (A, B, C) for the pitch attitude angle ($\theta$), which is transmitted to the motor means (7), this control law corresponding:

      • if the duration T is less than or equal to the nominal duration Tnom, to said nominal control law (A); and
      • if the duration T is greater than the nominal duration Tnom, to a modified control law (B, C) which is such that at a duration T after the actuation of the control member (3) by the pilot, the pitch attitude angle ($\theta$) of the aircraft (Av) is substantially equal to said nominal value ($\theta$nom).

Fig. 1

Fig. 2A

Fig. 2B

Fig. 2C

Fig. 3

EP 1 273 986 B1